(19) Europäisches Patentamt
European Patent Office
Office européen des brevets

(11) **EP 3 139 221 B1**

(12) **EUROPÄISCHE PATENTSCHRIFT**

(45) Veröffentlichungstag und Bekanntmachung des Hinweises auf die Patenterteilung:
**03.03.2021 Patentblatt 2021/09**

(51) Int Cl.:
***G05B 13/04*** *(2006.01)*

(21) Anmeldenummer: **16182394.3**

(22) Anmeldetag: **02.08.2016**

(54) **AUTONOMER L1-ADAPTIVER REGLER MIT EXAKTER POLVORGABE**

AUTONOMOUS L1-ADAPTIVE CONTROLLER WITH EXACT POLE PLACEMENT

REGULATEUR ADAPTATIF L1 AUTONOME AVEC PLACEMENT EXACT DE PÔLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.08.2015 DE 102015114421**

(43) Veröffentlichungstag der Anmeldung:
**08.03.2017 Patentblatt 2017/10**

(73) Patentinhaber: **Airbus Defence and Space GmbH 82024 Taufkirchen (DE)**

(72) Erfinder:
• **Hellmundt, Fabian**
**85774 Unterföhring (DE)**
• **Dodenhöft, Jens**
**81369 München (DE)**

(74) Vertreter: **Krebs, Jörg**
**Airbus Defence and Space GmbH Patentabteilung XII 81663 München (DE)**

(56) Entgegenhaltungen:
**US-A1- 2011 196 514**

• **HELLMUNDT F; DODENHÖFT J; HOLZAPFEL F: "L1 Adaptive Control with Eigenstructure Assignment for Pole Placement considering Actuator Dynamics and Delays", AIAA GUIDANCE, NAVIGATION, AND CONTROL CONFERENCE, Januar 2016 (2016-01), XP002765527, Gefunden im Internet: URL:http://arc.aiaa.org/doi/abs/10.2514/6. 2016-1382>**

**Beschreibung**

Die Erfindung betrifft eine Prädiktoreinrichtung für eine Regelungsvorrichtung, zur Regelung wenigstens einer Stellgröße einer Regelstrecke, die wenigstens einen mittels der Stellgröße steuerbaren Aktor und einen von einem Sensor erfassbaren Zustand mit wenigstens einer Regelgröße aufweist. Des Weiteren weist die Regelungseinrichtung eine Adaptionseinrichtung, die zum Erzeugen eines matched Unsicherheitssignals und eines unmatched Unsicherheitssignals ausgebildet ist, und eine L1-adaptive Regelungseinrichtung auf. Die Prädiktoreinrichtung weist eine Zustandsmodellierungseinrichtung zum Schätzen eines Verhaltens der Regelstrecke auf und ist zur Ausgabe eines geschätzten Zustands mit wenigstens einer Schätzgröße ausgebildet. Des Weiteren weist die Prädiktoreinrichtung wenigstens eine erste Rückführeinrichtung zur Bereitstellung eines ersten Rückführsignals aus einem Ausgangssignal der Zustandsmodellierungseinrichtung zur Einspeisung in eine erste Kombinationseinrichtung auf, wobei ein gemessener und/oder geschätzter Aktorzustand in die erste Kombinationseinrichtung eingespeist ist, wobei die Zustandsmodellierungseinrichtung zur Aufnahme eines unmatched Eingangssignals an einem unmatched Eingang ausgebildet ist, wobei das matched Unsicherheitssignal zur Kombination mit den weiteren Signalen in die erste Kombinationseinrichtung eingespeist ist, wobei die erste Kombinationseinrichtung zur Kombination der eingespeisten Signale ausgebildet ist und wobei das durch die erste Kombinationseinrichtung erhaltbare Signal ein matched Eingangssignal zur Einspeisung in einen matched Eingang der Zustandsmodellierungseinrichtung bildet. Des Weiteren betrifft die Erfindung ein Luftfahrzeug mit einer derartigen Regelungsvorrichtung zur Flugregelung. Die Erfindung betrifft auch ein L1-adaptives Regelungsverfahren unter Verwendung einer L1-adaptiven Regelungseinrichtung, einer Adaptionseinrichtung, die ein matched Unsicherheitssignal und ein unmatched Unsicherheitssignal erzeugt, sowie einer Prädiktoreinrichtung, die eine Zustandsmodellierungseinrichtung aufweist. Darüber hinaus betrifft die Erfindung ein Luftfahrzeug mit einer Regelungsvorrichtung zur Flugregelung, die zur Durchführung eines derartigen Verfahrens ausgebildet ist.

Es gibt Bestrebungen, Prädiktoreinrichtungen der eingangs genannten Art insbesondere in Luftfahrzeugen anzuwenden, in denen sie mit einer Adaptionseinrichtung und einer L1-adaptiven Regelungseinrichtung zu einer Regelungsvorrichtung zur Regelung von Stellgrößen des Luftfahrzeugs, beispielsweise Schub oder Stellung von Höhen- und/oder Seitenruder, verbunden sind. Um den Effekt der Regelung der Stellgrößen des Luftfahrzeugs feststellen zu können, sind darüber hinaus Sensoren vorgesehen, welche einen Zustand, beispielsweise eine Drehrate oder eine Geschwindigkeit des Luftfahrzeugs, messen können.

Die Regelstrecke, im Fall des Luftfahrzeugs also das Luftfahrzeug mit seiner zugehörigen Flugdynamik, weist gewisse Unsicherheiten auf, die eine allgemein gültige konstante Parametrisierung von bisher verwendeten Basisregelungseinrichtungen, die beispielsweise einen PID-Regler aufweisen, erschweren. Insbesondere können derartige Basisregelungseinrichtungen auf Änderungen der Eigenschaften der Regelstrecke, insbesondere auf Veränderungen einer Charakteristik der Unsicherheiten, die zu einem Verhalten führen, das sich von einem nominellen Verhalten unterscheidet, nicht adäquat reagieren. Zusätzlich dazu kann daher die L1-adaptive Regelungseinrichtung vorgesehen sein, um die Auswirkungen von Abweichungen von diesem nominellen Bereich beziehungsweise von Unsicherheiten auf den Regelkreis zu begrenzen.

Aus der US 2011/0196514 A1 ist es bekannt, in einer L1-adaptiven Regelungseinrichtung einen Tiefpass vorzusehen, um ein Rückführungssignal zur Parametrisierung der adaptiven Regelungseinrichtung zu stabilisieren.

Die Erfindung beruht auf der **Aufgabe,** eine Prädiktoreinrichtung der eingangs genannten Art so weiterzubilden, dass der Aufbau einer Regelungsvorrichtung, in welcher die Prädiktoreinrichtung eingesetzt wird, vereinfacht werden kann.

Zur **Lösung** der Aufgabe wird eine Prädiktoreinrichtung gemäß Patentanspruch 1 vorgeschlagen, die zusätzlich zu den eingangs genannten Merkmalen eine zweite Rückführeinrichtung zur Bereitstellung eines zweiten Rückführsignals aus dem Ausgangssignal zur Einspeisung in eine zweite Kombinationseinrichtung aufweist, wobei das unmatched Unsicherheitssignal in die zweite Kombinationseinrichtung eingespeist ist und wobei das durch die zweite Kombinationseinrichtung erhaltbare Signal ein unmatched Eingangssignal zur Einspeisung in einen unmatched Eingang der Zustandsmodellierungseinrichtung bildet.

Durch diese doppelte Rückführung von matched- und unmatched-Signalen und deren Kombination mit matched und unmatched Unsicherheitssignalen kann, insbesondere durch geeignete Wahl von Verstärkungsfaktoren der ersten und zweiten Rückführeinrichtung, ein Regelungseffekt erreicht werden, der wie eine gewöhnliche lineare Rückführung der Zustände der Regelstrecke wirkt. Auf diese Weise wird eine präzise Eigenwertplatzierung sichergestellt.

Eine derartige Prädiktoreinrichtung erlaubt es, eine vollständige Regelung alleine mittels der adaptiven Regelungsvorrichtung durchzuführen und auf eine separate Baseline-Regelungseinrichtung zu verzichten. Insbesondere ist es dadurch möglich, eine exakte Polzuweisung für den Regelkreis durchzuführen. Dies bewirkt, dass die dadurch erreichte Regelung trotz ihres vereinfachten Aufbaus sowohl Robustheit gegenüber Unsicherheiten als auch eine gewünschte Dynamik aufweist.

Vorteilhafte Ausgestaltungen der Erfindung sind Gegenstand der Unteransprüche.

Die Prädiktoreinrichtung kann eine Wandlermodellierungseinrichtung zur Schätzung des Aktorzustands aufgrund der Stellgröße aufweisen. Dadurch kann die Prädiktoreinrichtung auch eingesetzt werden, wenn eine unmittelbare Messung eines Aktorzustands nicht möglich oder nicht vorgesehen ist.

Die Wandlermodellierungseinrichtung kann vorteilhaft zur Modellierung von Aktoren und/oder Sensoren der Regelstrecke ausgebildet sein. Dadurch wird erreicht, dass die Wandlereigenschaften der Aktoren und der Sensoren in die Schätzung des Verhaltens der Regelstrecke mit aufgenommen und somit bei der Durchführung der Regelung mit berücksichtigt werden.

Die erste Rückführeinrichtung und/oder die zweite Rückführeinrichtung können eine Multiplikationseinrichtung aufweisen. Dadurch ist es möglich, die Wirkung der Rückführung des Ausgangssignals der Zustandsmodellierungseinrichtung und somit die Eigenschaften des gesamten Regelkreises abzustimmen.

Das durch die erste Kombinationseinrichtung erhaltbare Signal kann aus einer Addition des matched Unsicherheitssignals und des Ausgangssignals der Wandlermodellierungseinrichtung oder wenigstens einer ausgewählten Zustandsgröße des Aktorzustands sowie einer Subtraktion des ersten Rückführsignals erhaltbar sein.

Das durch die zweite Kombinationseinrichtung erhaltbare Signal kann aus einer Subtraktion des zweiten Rückführsignals von dem unmatched Unsicherheitssignal erhaltbar sein.

Vorteilhaft ist die Zustandsmodellierungseinrichtung zur Modellierung einer Flugdynamik eines Luftfahrzeugs ausgebildet. Dadurch sind die Prädiktoreinrichtung und die Regelungsvorrichtung, die damit gebildet ist, zur Flugregelung in Luftfahrzeugen einsetzbar.

Die Aufgabe wird des Weiteren durch ein Luftfahrzeug gemäß Patentanspruch 8 gelöst, das eine Regelungseinrichtung zur Flugregelung aufweist, die eine lösungsgemäße Prädiktoreinrichtung aufweist.

Darüber hinaus wird die Aufgabe auch durch ein L1-adaptives Regelungsverfahren gemäß Patentanspruch 9 unter Verwendung einer L1-adaptiven Regelungseinrichtung, einer Adaptionseinrichtung, die Schätzungen für ein matched Unsicherheitssignal und ein unmatched Unsicherheitssignal erzeugt, sowie einer Prädiktoreinrichtung, die eine Zustandsmodellierungseinrichtung aufweist, mit den Schritten Rückführung eines Ausgangssignals der Zustandsmodellierungseinrichtung in eine erste Rückführeinrichtung, Umsetzen des Ausgangssignals in ein erstes Rückführsignal durch die erste Rückführeinrichtung und Erzeugen eines matched Eingangssignals für die Zustandsmodellierungseinrichtung mittels der ersten Kombinationseinrichtung durch Addition des matched Unsicherheitssignals und eines gemessenen oder geschätzten Aktorzustands sowie Subtraktion des ersten Rückführsignals gelöst.

Vorteilhaft weist das Verfahren die Schritte Rückführung des Ausgangssignals der Zustandsmodellierungseinrichtungen in eine zweite Rückführeinrichtung, Umsetzen des Ausgangssignals in ein zweites Rückführsignal durch die zweite Rückführeinrichtung, Erzeugen eines unmatched Eingangssignals für die Zustandsmodellierungseinrichtung mittels der zweiten Kombinationseinrichtung durch Subtraktion des zweiten Rückführsignals von dem unmatched Unsicherheitssignal auf.

Durch diese doppelte Rückführung von matched- und unmatched-Signalen und deren Kombination mit matched und unmatched Unsicherheitssignalen kann, insbesondere durch geeignete Wahl von Verstärkungsfaktoren der ersten und zweiten Rückführeinrichtung ein Regelungseffekt erreicht werden, der wie eine gewöhnliche lineare Rückführung der Zustände der Regelstrecke wirkt. Auf diese Weise kann eine präzise Eigenwertplatzierung sichergestellt werden. Dadurch wird erreicht, dass der Regelkreis sowohl Robustheit gegenüber Unsicherheiten als auch eine gewünschte Dynamik aufweist.

Vorteilhafte Ausgestaltungen des Verfahrens sind Gegenstand des Unteranspruchs 10.

Das Verfahren kann darüber hinaus den Schritt Schätzen eines Aktorzustands mittels einer Wandlermodellierungseinrichtung, die aus einer Stellgröße ein Ausgangssignal erzeugt, das eine Schätzung von Zustandsgrößen des Aktorzustands bildet, aufweisen.

Darüber hinaus wird die Aufgabe durch ein Luftfahrzeug mit einer Regelungsvorrichtung zur Flugregelung, die zur Durchführung des genannten Verfahrens gemäß Patentanspruch 9 oder 10 ausgebildet ist, gelöst.

Die Erfindung wird nachfolgend anhand eines Ausführungsbeispiels näher erläutert, das in den Zeichnungen lediglich schematisch gezeigt ist. Es zeigen im Einzelnen:

Fig. 1    eine schematische Blockdarstellung einer Prädiktoreinrichtung gemäß einer ersten Ausführungsform der vorliegenden Erfindung;

Fig. 2    eine schematische Blockdarstellung eines Regelkreises mit einer Regelungseinrichtung, die eine Prädiktoreinrichtung gemäß einer ersten Ausführungsform der vorliegenden Erfindung aufweist;

Fig. 3    eine schematische Blockdarstellung einer Regelstrecke aus dem Regelkreis gemäß Fig. 2;

Fig. 4    eine schematische Blockdarstellung einer Prädiktoreinrichtung gemäß einer zweiten Ausführungsform der vorliegenden Erfindung;

Fig. 5     eine schematische Blockdarstellung einer Prädiktoreinrichtung gemäß einer dritten Ausführungsform der vorliegenden Erfindung;

Fig. 6     eine schematische Blockdarstellung wie in Fig. 2 mit einer Regelungseinrichtung, die eine Prädiktoreinrichtung gemäß einer zweiten oder dritten Ausführungsform der vorliegenden Erfindung aufweist;

Fig. 7     eine schematische Blockdarstellung einer Regelstrecke zur Verwendung mit einer Prädiktoreinrichtung gemäß Fig. 4;

Fig. 8     eine verfeinerte schematische Blockdarstellung wie in Fig. 6; und

Fig. 9     ein Referenzmodell für eine Regelstrecke in Form eines Luftfahrzeugs zur Parametrisierung einer Prädiktoreinrichtung.

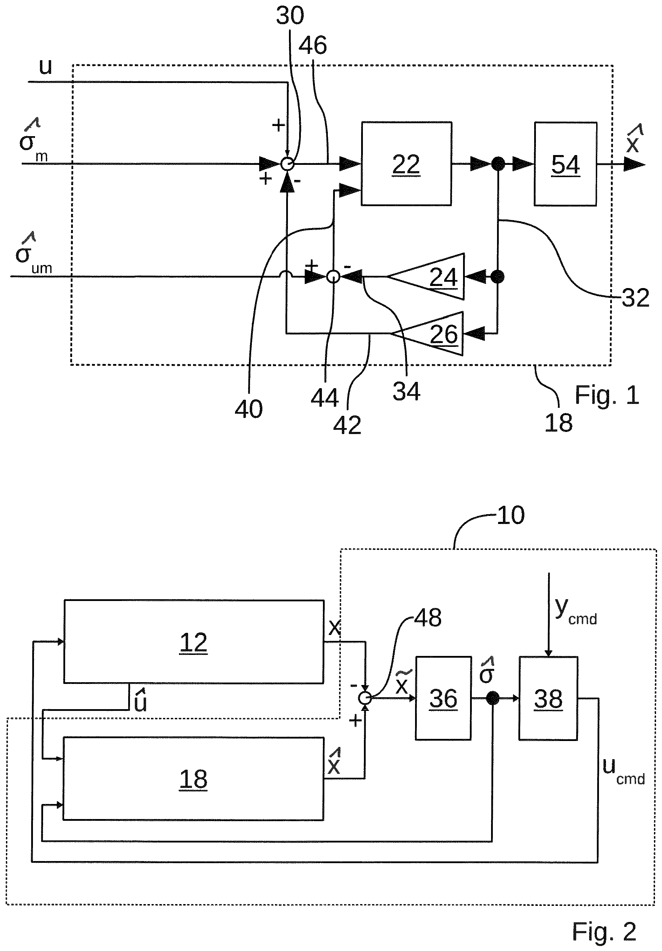

Fig. 1 bis 3 zeigen eine Prädiktoreinrichtung 18 gemäß einer ersten Ausführungsform der vorliegenden Erfindung zur Verwendung in einer Regelungsvorrichtung 10 für einen Regelkreis, wie er in Fig. 2 gezeigt ist. Der Regelkreis weist über die Prädiktoreinrichtung 18 hinaus eine Regelstrecke 12, eine Adaptionseinrichtung 36 und eine L1-adaptive Regelungseinrichtung 38 auf.

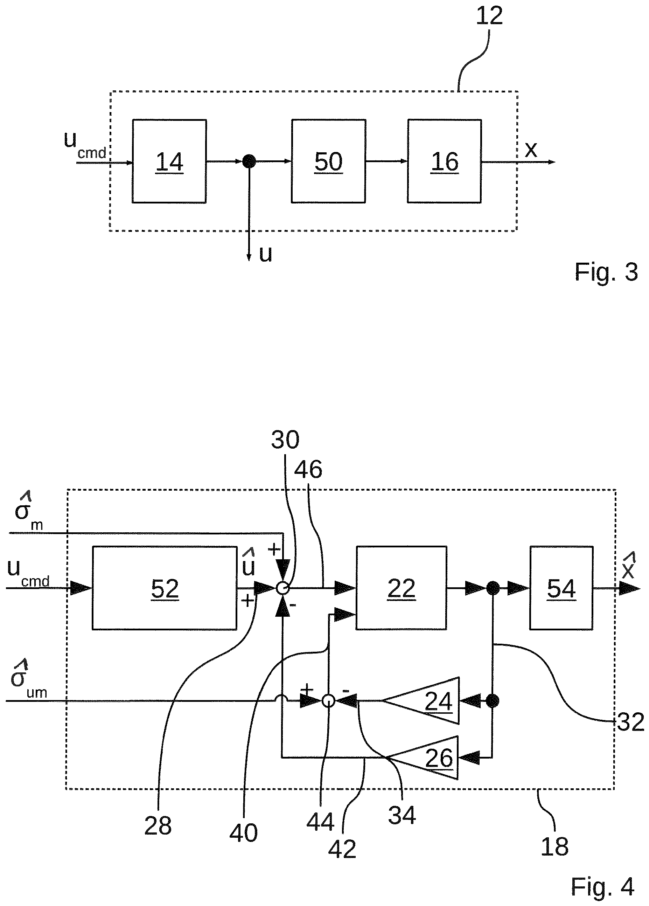

Die in Fig. 2 gezeigte Regelungsvorrichtung 10 dient der Erzeugung von geeigneten Stellgrößen $u_{cmd}$ der Regelstrecke 12. Die Regelstrecke 12, die beispielsweise wie in Fig. 3 gezeigt ein Luftfahrzeug 50 aufweisen kann, weist einen Zustand auf, der gewöhnlich mehrere Zustandsgrößen aufweist und der durch von den Stellgrößen $u_{cmd}$ steuerbare Aktoren 14 beeinflussbar ist. Darüber hinaus weist die Regelstrecke 12 Sensoren 16 auf, welche die Zustandsgrößen des Luftfahrzeugs 50 messen können. Das Ergebnis dieser Messungen bildet eine Zustandsgröße $x$, die je nach Anwendung skalar oder auch als Vektor ausgedrückt werden kann. Die Zustandsgröße $x$ kann, wenn sie mehrere Zustandsgrößen abbildet, als Vektor mit mehreren Einzelgrößen als dessen Komponenten ausgedrückt werden. Dasselbe gilt auch für andere Größen, beispielsweise die Stellgröße $u_{cmd}$.

Die Prädiktoreinrichtung 18 dient der Abschätzung einer Schätzgröße $\hat{x}$, die aus einer Zustandsgröße $u$ und einem Unsicherheitssignal $\hat{\sigma}$ gewonnen wird. Die Zustandsgröße $u$ kann skalar sein, wenn sie lediglich eine Komponente aufweist und kann ein Vektor sein, wenn sie mehrere Komponenten aufweist. Das als Vektor darstellbare Unsicherheitssignal $\hat{\sigma}$ weist beispielsweise zwei Komponenten, insbesondere ein matched Unsicherheitssignal $\hat{\sigma}_m$ und ein unmatched Unsicherheitssignal $\hat{\sigma}_{um}$ auf. Das matched Unsicherheitssignal $\hat{\sigma}_m$ und das unmatched Unsicherheitssignal $\hat{\sigma}_{um}$ werden von der Adaptionseinrichtung 36 bereitgestellt. Der Begriff "matched" bezieht sich darauf, dass das Signal, das derart bezeichnet ist, auf gleiche Art und Weise die Zustände beziehungsweise die Zustandsgröße $x$ beeinflusst wie Aktoren des Regelkreises. Im Gegensatz dazu bezeichnet der Begriff "unmatched" Signale, die auf zu den physikalischen Aktoren komplementäre Art und Weise die Zustände $x$ des Systems beeinflussen.

In Fig. 3 können die Aktoren 14 beispielsweise aufgrund der Stellgröße $u_{cmd}$ ein Höhenruder einstellen, dessen tatsächliche Auslenkung (Zustandsgröße) $u$ gemessen wird, wobei dieser Messwert an die Prädiktoreinrichtung 18 übergeben wird.

Die Prädiktoreinrichtung 18 erzeugt aus der Auslenkung $u$ und dem durch die Adaptionseinrichtung 36 geschätzten Unsicherheitssignal $\hat{\sigma}$ eine Schätzgröße $\hat{x}$. Zu diesem Zweck enthält die Prädiktoreinrichtung 18 eine Nachbildung der Regelstrecke 12. Eine derartige Nachbildung kann sowohl durch elektronische oder mechanische Komponenten als auch durch rein algorithmische Nachbildung der Eigenschaften der Regelstrecke 12 durchgeführt werden. In dem vorliegenden Fall weist die Prädiktoreinrichtung 18 beispielsweise ein Modell des Luftfahrzeugs 50 sowie der Sensoren 16 auf. Das Modell des Luftfahrzeugs 50 ist in einer Zustandsmodellierungseinrichtung 22, das Modell der Sensoren 16 in einer Sensormodellierungseinrichtung 54 enthalten.

Mittels einer Fehlerermittlungseinrichtung 48 wird ein Prädiktionsfehler $\tilde{x}$ durch Subtraktion der Regelgröße $x$ von der Schätzgröße $\hat{x}$ errechnet. Der Prädiktionsfehler $\tilde{x}$ wird an die Adaptionseinrichtung 36 übergeben, die daraus das Unsicherheitssignal $\hat{\sigma}$ erzeugt. Das Unsicherheitssignal $\hat{\sigma}$ wird, wie bereits oben beschrieben, als zusätzlicher Eingangswert an die Prädiktoreinrichtung 18 übergeben.

Das Unsicherheitssignal $\hat{\sigma}$ wird darüber hinaus als Eingangssignal an die L1-adaptive Regelungseinrichtung 38 übergeben. Die L1-adaptive Regelungseinrichtung 38 erzeugt aus dem Unsicherheitssignal $\hat{\sigma}$ und einer Führungsgröße $y_{cmd}$ die Stellgröße $u_{cmd}$, die wiederum an die Regelstrecke 12 übergeben wird.

Die Zustandsmodellierungseinrichtung 22 weist zwei Eingänge zur Aufnahme von zwei Eingangssignalen auf. Einer der Eingänge nimmt ein matched Eingangssignal, der andere der Eingänge ein unmatched Eingangssignal auf. Zur Verwendung in einer Flugregelung erzeugt die Zustandsmodellierungseinrichtung 22 beispielsweise einen geschätzten Anstellwinkel $\hat{\alpha}$ und eine geschätzte Nickrate $\hat{q}$, die gemeinsam die Schätzgröße $\hat{x}$ als Ausgangssignal 32 der Zustandsmodellierungeinrichtung 22 bilden. Die Schätzgröße kann in einem derartigen Fall als Vektor der Einzelwerte

der Schätzgröße $\hat{x}$ geschrieben werden, beispielsweise folgendermaßen: $\begin{bmatrix} \hat{\alpha} \\ \hat{q} \end{bmatrix}$

Zur Rückführung der Schätzgröße $\hat{x}$ der Zustandsmodellierungseinrichtung 22 an deren matched und unmatched Eingang sind eine erste Rückführeinrichtung 26 und eine zweite Rückführeinrichtung 24 vorgesehen, deren Eingänge jeweils mit dem geschätzten Anstellwinkel $\hat{\alpha}$ und der geschätzten Nickrate $\hat{q}$, also dem Ausgangssignal 32 der Zustandsmodellierungseinrichtung 22, gespeist werden. Ausschließlich um die Darstellung zu vereinfachen ist das Ausgangssignal 32 in einigen Figuren lediglich durch eine einzige Linie dargestellt.

Die erste Rückführeinrichtung 26 erzeugt ein erstes Rückführsignal 42, das zusammen mit dem matched Unsicherheitssignal $\hat{\sigma}_m$ und der Stellgröße $u$ in eine erste Kombinationseinrichtung 30 eingespeist wird, die aus den eingespeisten Signalen $\hat{\sigma}_m$, $u$, 42 ein matched Eingangssignal 46 für die Zustandsmodellierungseinrichtung 22 erzeugt, beispielsweise indem die eingespeisten Signale addiert werden, wobei Rückführsignale (Feedback), in diesem Fall das erste Rückführsignal 42, mit einem negativen Vorzeichen in die Addition eingehen (negatives Feedback), also von der Summe der beiden anderen Signale $\hat{\sigma}_m$, $u$ abgezogen werden.

Die zweite Rückführeinrichtung 24 erzeugt ein zweites Rückführsignal 34, das zusammen mit dem unmatched Unsicherheitssignal $\hat{\sigma}_{um}$ in eine zweite Kombinationseinrichtung 44 eingespeist wird, die aus den eingespeisten Signalen $\hat{\sigma}_{um}$, 34 ein unmatched Eingangssignal 40 in derselben Weise erzeugt, wie die erste Kombinationseinrichtung 30. Das zweite Rückführsignal 34 ist ein negatives Feedback und geht mit einem negativen Vorzeichen in die Addition in der zweiten Kombinationseinrichtung 44 ein.

Die erste Rückführeinrichtung 26 und die zweite Rückführeinrichtung 24 sind beispielsweise durch Matrizen- oder Vektormultiplikationseinrichtungen gebildet, welche die in die Rückführeinrichtung 26, 24 eingespeisten Signale miteinander linear zu dem jeweiligen Ausgangssignal beziehungsweise Rückführsignal 42, 34 verknüpfen.

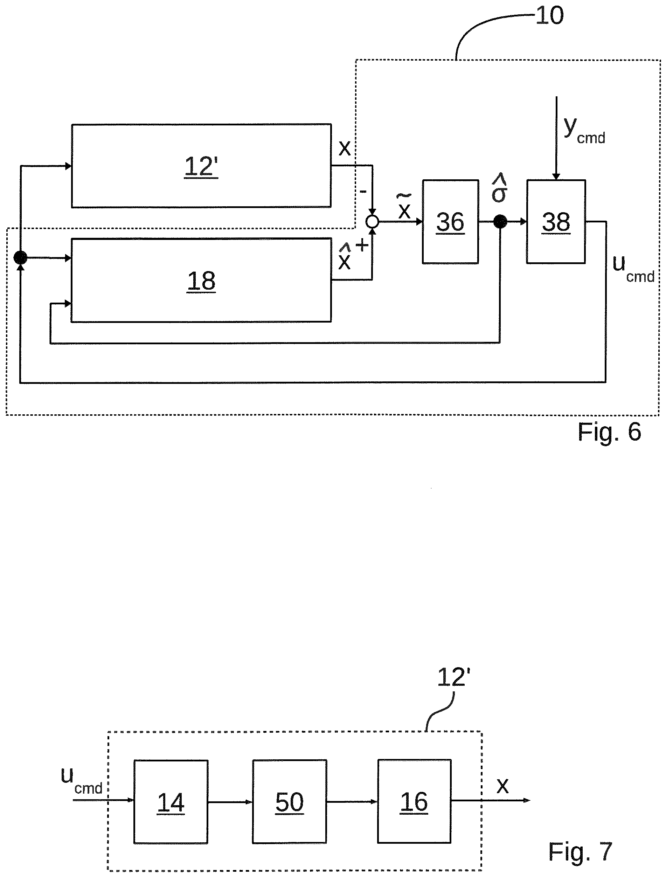

In Fig. 6 ist eine ähnliche Regelungseinrichtung 10 gezeigt wie in den Fig. 1 bis 3. In diesem Fall ist es in der Regelstrecke 12' allerdings nicht möglich, den Zustand der Aktoren 14 zu messen, so dass die in Fig. 4 gezeigte Prädiktoreinrichtung 18 als Nachbildung der Regelstrecke 12' beispielsweise zusätzlich zu der Zustandsmodellierungseinrichtung 22 und der Sensormodellierungseinrichtung 54 ein Modell der Aktoren 14 in Form einer Aktormodellierungseinrichtung 52 aufweist, die aus der Stellgröße $u_{cmd}$ ein Ausgangssignal 28, das einer geschätzten Zustandsgröße $\hat{u}$ entspricht, entsprechend der Stellgröße $u$ der ersten Ausführungsform erzeugt. Das Ausgangssignal 28 ersetzt somit die gemessene Zustandsgröße $u$. Somit ist keine Messung der Zustandsgröße $u$ notwendig. Allerdings ist das Ausgangssignal 28 lediglich eine geschätzte Zustandsgröße $\hat{u}$. Die zugehörige Regelstrecke 12' ist in Fig. 7 gezeigt.

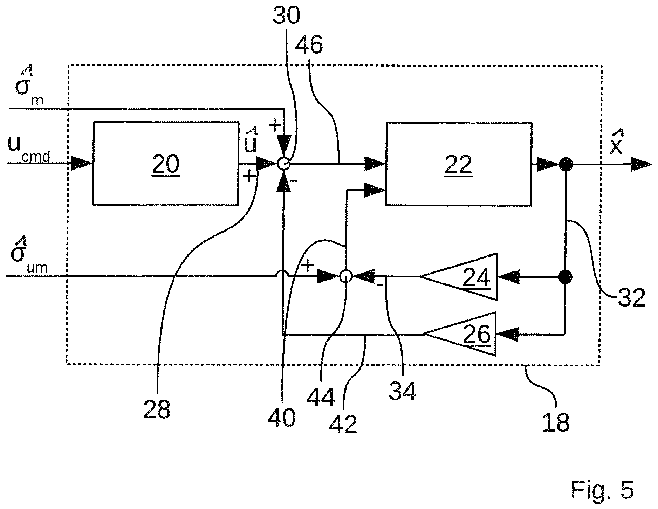

Fig. 5 zeigt eine weitere vereinfachte Ausführungsform der Prädiktoreinrichtung 18 zur Verwendung in einer Flugregelung, beispielsweise für ein Luftfahrzeug vom Typ F-16, die eine Wandlermodellierungseinrichtung 20 sowie eine Zustandsmodellierungseinrichtung 22 aufweist. In der Wandlermodellierungseinrichtung 20 sind die Aktormodellierungseinrichtung 52 und die Sensormodellierungseinrichtung 54 zusammengefasst. Dies ist gewöhnlich möglich, da es sich bei diesen Komponenten um LTI-Komponenten handelt.

Die Wandlermodellierungseinrichtung 20 nimmt als Eingangssignal die Stellgröße $u_{cmd}$ auf und erzeugt aus dieser ein Ausgangssignal 28, das den Effekt von Aktoren und Sensoren in der Regelstrecke 12 modelliert.

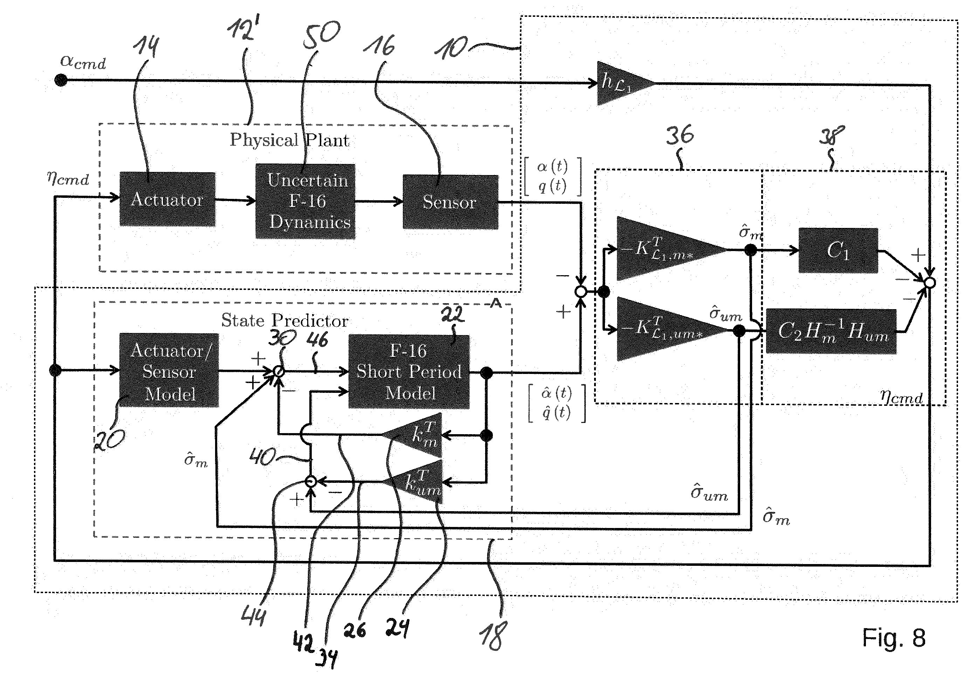

Fig. 6 und 8 zeigen einen Regelkreis, in dem eine Prädiktoreinrichtung 18 gemäß der zweiten oder dritten Ausführungsform verwendbar ist. Die Regelstrecke 12' ist nicht dazu ausgebildet, eine Stellgröße $u$ zu messen.

Fig. 8 zeigt einen geschlossenen Regelkreis mit einer Regelungsvorrichtung 10 zur Flugregelung, welche eine Prädiktoreinrichtung 18 gemäß der zweiten oder dritten Ausführungsform aufweist. Die Führungsgröße $y_{cmd}$ wird im vorliegenden Beispiel durch den gewünschten Anstellwinkel $\alpha_{cmd}$ gebildet, die Stellgröße $u_{cmd}$ durch einen Positionsvektor $\eta_{cmd}$. Die matched- und unmatched-Zweige der Adaptionseinrichtung 36 und der L1-adaptiven Regelungseinrichtung 38 sind separat dargestellt und mit beispielhaften Übertragungsfunktionen gekennzeichnet.

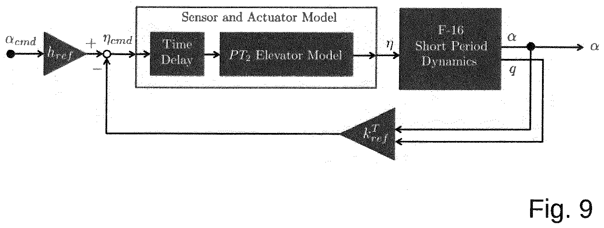

Für Anwendungen in nicht autonom geflogenen Luftfahrzeugen wird generell ein lineares Eingangs-Ausgangs-Verhalten gewünscht, da dies für einen menschlichen Bediener zu einem vorhersehbaren Verhalten führt und strukturelle Luftfahrzeugkomponenten entsprechend dimensioniert werden können. Das gewünschte Verhalten des geschlossenen Regelkreises ist daher beispielsweise linear. Wie das Beispiel in Fig. 9 zeigt, kann unter dieser Prämisse ein lineares Referenzmodell unter Verwendung einer linearen Approximation der Kurzzeitdynamik des Luftfahrzeugs und Rückführung der Ausgänge entworfen werden. Um die Pole der Kurzzeitdynamik mit den Verstärkungsfaktoren der Rückführung $k_{ref}^T$ zu platzieren, kann beispielsweise Eigenstrukturvorgabe als Auslegungsstrategie verwendet werden. Durch die Anwendung der Eigenstrukturvorgabe können Aktordynamik und Sensorverzögerungen explizit in die Berechnung einbezogen werden. Sowohl die Sensorverzögerung als auch die Aktordynamik sollten in der Referenzdynamik enthalten sein, da ein realistisches und erreichbares Referenzverhalten für die dem Modell folgende Steuerung erzeugt werden sollte. Würde eine dieser beiden Parameter vernachlässigt, so könnte dies die Folge des Referenzmodells unmöglich machen, da das tatsächliche Luftfahrzeug sowohl Sensorverzögerungen als auch Aktordynamik unterworfen ist. Das in Fig. 9 gezeigte Referenzmodell wird wie folgt mathematisch beschrieben:

$$\dot{x}_{ref}(t) = A_m x_{ref}(t) + B_m \left\{ \hat{G}_D(t) * \hat{G}_A(t) \right.$$
$$\left. * sat \left[ \int_{t_0}^{t} sat \left( \frac{\mathrm{d}\left( h_{ref} \cdot \alpha_{cmd}(\tau) - k_{ref}^T x_{ref}(\tau) \right)}{\mathrm{d}\tau} \right) \mathrm{d}\tau \right] \right\}$$

$$y_{ref} = c_m x_{ref} = \alpha_{ref},$$

wobei $x_{ref} = [\alpha_{ref}\, q_{ref}]^T$ und $\hat{G}_A(t)$ und $\hat{G}_D(t)$ jeweils Modelle des Aktors und der Sensorverzögerung sind. Der Verstärkungsfaktor der Rückführung $k_{ref}^T$ kann durch bekannte Verfahren, beispielsweise Eigenstrukturvorgabe unter Verwendung der Kurzzeit-, der Aktor- und der Verzögerungsdynamik parametrisiert werden. Der Vorsteuerungsverstärkung $h_{ref}$ wird so berechnet, dass eine stationäre, präzise Führungsfolge erreicht wird.

Ziel der autonomen Regelung durch die Regelungsvorrichtung 10 ohne Verwendung einer Basisregelung ist es, in dem oben gezeigten Referenzmodell sowohl unter nominellen (gewöhnlichen) als auch nicht nominellen Bedingungen eine gute Regelungsgüte zu erreichen. Da die intrinsische Luftfahrzeugdynamik selbst unter nominalen Bedingungen nichtlinear ist, muss die Regelungsvorrichtung 10 diese Nichtlinearitäten kompensieren, um das gewünschte lineare Verhalten einzustellen. Gleichzeitig muss garantiert sein, dass die Abweichung von der Referenzdynamik aufgrund von nicht-nominellem Verhalten der Regelstrecke in einem akzeptablen Bereich bleibt.

Die bekannte L1-Regelungsarchitektur wurde für diese Regelungsaufgabe erweitert. Da Sensorverzögerungen und Aktordynamik, auch umfassend Sättigung, bei Betrachtung eines realen Luftfahrzeugs nicht vernachlässigbar sind, wurden diese Effekte ebenfalls in der Prädiktoreinrichtung 18 berücksichtigt. Diese Effekte zu vernachlässigen würde zu einer Prädiktoreinrichtung 18 führen, die von der tatsächlichen Regelstrecke wesentlich abweicht und könnte zu einem unvorhersehbaren Regelkreisverhalten führen, beispielsweise wenn die Aktoren in Sättigung sind.

Eine einfache Idee für die Parametrisierung einer angemessenen Prädiktoreinrichtung 18 wäre es, ein ganzheitliches Zustandsraummodell für Sensorverzögerungen, Aktordynamik und die gewünschte Kurzzeitdynamik zu entwerfen. Da in diesem Fall die Schätzgröße $\hat{x}$ Aktor- und Sensorverzögerungszustände umfassen würde, wäre eine Messung der zugehörigen Regelgrößen $x$ notwendig, um es der stückweise konstanten L1-Regelungsarchitektur zu erlauben, den Schätzfehler $\tilde{x}$ zu berechnen. Da in der realen Welt derartige Messergebnisse, beispielsweise für die Verzögerung, oftmals nicht verfügbar sind, wird dieser Ansatz vermieden.

Die in Fig. 5 gezeigte Prädiktoreinrichtung 18 ist lediglich von Messungen des Anstellwinkels $\alpha$ und der Nickrate $q$ abhängig. Der zugehörige Regelkreis ist in Fig. 8 abgebildet. Es ist zu beachten, dass das Diagramm in Fig. 8 eine

$$K_{L1*} =: \begin{bmatrix} K_{L1,m*}^T \\ K_{L1,um*}^T \end{bmatrix}$$

Aufteilung der L1-Gain-Matrix $K_{L1*}$ verwendet. Sofern das Höhenruder eine Messung seiner Auslenkung $\eta$ bereitstellt, ist die Wandlermodellierungseinrichtung 20 in der Prädiktoreinrichtung 18 nicht zwingend notwendig, da die Messung stattdessen verwendet werden kann. Stattdessen kann die Sensormodellierungeinrichtung 54 vorgesehen werden, wie in der Prädiktoreinrichtungen 18 gemäß der ersten oder zweiten Ausführungsform. Ein Vergleich zwischen tatsächlichem und geschätztem Zustand wird lediglich bezogen auf den Anstellwinkel $\alpha$ und die Nickrate $q$ durchgeführt. Daher benötigt die Prädiktoreinrichtung 18 keine unmittelbare Messung des Sensor- oder Aktorzustands.

Alle zwischen den Einrichtungen 18, 20, 22, 24, 26, 30, 36, 38, 44, 48, 52, 54 übermittelten Signale und/oder Größen können sowohl Skalare als auch Vektoren sein.

Die gewöhnliche L1-adaptive Regelungsarchitektur besteht aus drei unterschiedlichen Hauptkomponenten: einer Prädiktoreinrichtung 18, einer Adaptionseinrichtung 36 (Adaptionsgesetz) und einer L1-adaptiven Regelungseinrichtung 38 (Regelgesetz). Die vorliegende Erfindung modifiziert die Dynamik der Prädiktoreinrichtung 18 so, dass mittels der Rückführeinrichtungen 26, 24 und der Kombinationseinrichtungen 30, 44 ein Rückführungsausdruck zu dem gewöhnlichen adaptiven Regelsignal beispielsweise zum Zweck der Polzuweisung hinzugefügt wird. Diese Modifikation wird dadurch erreicht, dass der Zustand der Zustandsmodellierungseinrichtung 22, beziehungsweise die Schätzgröße $\hat{x}$, an matched und unmatched Eingänge der Zustandsmodellierungseinrichtung 22 rückgeführt wird, wie es in den Fig. 1, 4, 5 und 8 dargestellt ist.

Gewöhnlich wird die Dynamik der Zustandsmodellierungseinrichtung 22 so gewählt, dass sie mit der nominalen Dynamik der Regelstrecke 12 übereinstimmt. Die zusätzliche Rückführung gemäß der vorliegenden Erfindung führt zu einer Anregung des Schätzfehlers, was wiederum zu einer Veränderung der an die Regelstrecke 12 weitergegebenen Stellgröße führt. Durch Wahl der Verstärkungsfaktoren der ersten und zweiten Rückführeinrichtung 26, 24 in der Prädiktoreinrichtung 18 kann diese Veränderung der Stellgröße so ausgestaltet werden, dass sie wie eine gewöhnliche lineare Rückführung der Zustände der Regelstrecke wirkt. Auf diese Weise kann eine präzise Eigenwertplatzierung sichergestellt werden.

Wie in einer Basisregelung/Baseline-Regelungseinrichtung, die durch einen adaptiven Regler ergänzt wurde, kann die Robustheit der Regelung gegen Unsicherheiten der Regelstrecke mit dem Erreichen der gewünschten Dynamik für den Nominalfall kombiniert werden. Die vorliegende Erfindung erreicht dies ohne Verwendung einer herkömmlichen linearen Baseline-Regelungseinrichtung. Dies führt zu einer Vereinfachung des Reglerentwurfs und bietet eine vergleichbare Leistung.

Der technische Nutzen der vorliegenden Erfindung ist besonders für die Entwicklung und Planung von agilen Flugzeugen gegeben. Bei Agilität und Manövrierbarkeit spielt die adaptive Regelung ihre Stärken aus, die insbesondere in der schnellen Anpassung der Dynamik liegen. Mit den bisher vorliegenden Verfahren war es nicht möglich, zusätzlich eine exakte Polzuweisung durchzuführen. Die Lage der Pole entscheidet aber über Stabilität und Instabilität eines Flugkörpers und ist daher von großer Relevanz, auch für eine etwaige Zertifizierung. Eine exakte Positionierung/Vorhersehbarkeit der Pole hat Relevanz, da sie sowohl Robustheit als auch gewünschte Dynamik bietet. Anwendungsfälle der Erfindung können von bemannten Flugkörpern bis zu unbemannten großen und kleinen Drohnen reichen. Insbesondere werden durch die Erfindung bei einfachem Aufbau gut vorhersehbare Flugeigenschaften erzielt.

**Bezugszeichenliste**

10   Regelungsvorrichtung
12, 12', 12"   Regelstrecke
14   Aktor
16   Sensor
18   Prädiktoreinrichtung
20   Wandlermodellierungseinrichtung
22   Zustandsmodellierungseinrichtung
24   erste Rückführeinrichtung
26   zweite Rückführeinrichtung
28, $\hat{u}$   Ausgangssignal (der Wandlermodellierungseinrichtung 20)
30   erste Kombinationseinrichtung
32   Ausgangssignal (der Zustandsmodellierungseinrichtung 22)
34   erstes Rückführsignal
36   Adaptionseinrichtung
38   L1-adaptive Regelungseinrichtung
40   unmatched Eingangssignal
42   zweites Rückführsignal
44   zweite Kombinationseinrichtung
46   matched Eingangssignal
48   Fehlerermittlungseinrichtung
50   Luftfahrzeug
52   Aktormodellierungseinrichtung
54   Sensormodellierungseinrichtung
$u_{cmd}$   Stellgröße
$\eta_{cmd}$   Stellgröße
$x$   Regelgröße
$\begin{bmatrix} \alpha \\ q \end{bmatrix}$   Regelgröße
$\hat{x}$   Schätzgröße
$\begin{bmatrix} \hat{\alpha} \\ \hat{q} \end{bmatrix}$   Schätzgröße
$\tilde{x}$   Schätzfehler

$\hat{\sigma}_m$     matched Unsicherheitssignal (Schätzung)

$\hat{\sigma}_{um}$     unmatched Unsicherheitssignal (Schätzung)

$y_{cmd}$     Führungsgröße

**Patentansprüche**

1. Prädiktoreinrichtung (18) für eine Regelungsvorrichtung (10) zur Erzeugung wenigstens einer Stellgröße ($u_{cmd}$, $\eta_{cmd}$) einer Regelstrecke (12, 12'), wobei die Regelungsvorrichtung (10) wenigstens einen mittels der Stellgröße ($u_{cmd}$, $\eta_{cmd}$) steuerbaren Aktor (14), einen von einem Sensor (16) erfassbaren Zustand mit wenigstens einer Re-gelgröße $\left( x, \begin{bmatrix} \alpha \\ q \end{bmatrix} \right)$, eine Adaptionseinrichtung (36), die zum Erzeugen eines matched Unsicherheitssignals ($\hat{\sigma}_m$) und eines unmatched Unsicherheitssignals ($\hat{\sigma}_{um}$) ausgebildet ist, und eine L1-adaptive Regelungseinrichtung (38) aufweist, wobei die Prädiktoreinrichtung (18) zum Schätzen eines Verhaltens der Regelstrecke (12, 12') eine Zustandsmodellierungseinrichtung (22) aufweist und zur Ausgabe eines geschätzten Zustands mit wenigstens einer Schätzgröße $\left( \hat{x}, \begin{bmatrix} \hat{\alpha} \\ \hat{q} \end{bmatrix} \right)$ ausgebildet ist, wobei die Prädiktoreinrichtung (18) wenigstens eine erste Rückführeinrichtung (26) zur Bereitstellung eines ersten Rückführsignals (42) aus einem Ausgangssignal (32) der Zustandsmodellierungseinrichtung (22) zur Einspeisung in eine erste Kombinationseinrichtung (30) aufweist, wobei ein gemessener oder geschätzter Aktorzustand (28,$\eta$,$u$,$\hat{u}$) in die erste Kombinationseinrichtung (30) eingespeist ist, wobei die Zustandsmodellierungseinrichtung (22) zur Aufnahme eines unmatched Eingangssignals (40) an einem unmatched Eingang ausgebildet ist, wobei das matched Unsicherheitssignal ($\hat{\sigma}_m$) zur Kombination mit den weiteren Sig-nalen (28,$\eta$,$u$,$u$,42) in die erste Kombinationseinrichtung (30) eingespeist ist, wobei die erste Kombinationseinrichtung (30) zur Kombination der darin eingespeisten Signale (28, 42, $\hat{\sigma}_m$) ausgebildet ist und wobei das durch die erste Kombinationseinrichtung (30) erhaltbare Signal ein matched Eingangssignal (46) zur Einspeisung in einen matched Eingang der Zustandsmodellierungseinrichtung (22) bildet, **dadurch gekennzeichnet, dass** die Prädiktoreinrichtung (18) eine zweite Rückführeinrichtung (24) zur Bereitstellung eines zweiten Rückführsignals (34) aus dem Ausgangssignal (32) zur Einspeisung in eine zweite Kombinationseinrichtung (44) aufweist, wobei das unmat-ched Unsicherheitssignal ($\hat{\sigma}_{um}$) in die zweite Kombinationseinrichtung (44) eingespeist ist und wobei das durch die zweite Kombinationseinrichtung (44) erhaltbare Signal ein unmatched Eingangssignal (40) zur Einspeisung in einen unmatched Eingang der Zustandsmodellierungseinrichtung (22) bildet.

2. Prädiktoreinrichtung gemäß Anspruch 1, **dadurch gekennzeichnet, dass** die Prädiktoreinrichtung (18) eine Wandlermodellierungseinrichtung (20) zur Schätzung des Aktorzustands ($u$,$\hat{u}$,$\eta$) aufgrund der Stellgröße ($u_{cmd}$, $\eta_{cmd}$) aufweist.

3. Prädiktoreinrichtung nach Anspruch 2, **dadurch gekennzeichnet, dass** die Wandlermodellierungseinrichtung (20) zur Modellierung von Aktoren (14) und/oder Sensoren (16) der Regelstrecke (12, 12') ausgebildet ist.

4. Prädiktoreinrichtung gemäß einem der voranstehenden Ansprüche, **dadurch gekennzeichnet, dass** die erste Rückführeinrichtung (26) und/oder die zweite Rückführeinrichtung (24) eine Multiplikationseinrichtung aufweisen.

5. Prädiktoreinrichtung gemäß einem der voranstehenden Ansprüche, **dadurch gekennzeichnet, dass** das durch die erste Kombinationseinrichtung (30) erhaltbare Signal (46) aus einer Addition des matched Unsicherheitssignals ($\hat{\sigma}_m$) und des Ausgangssignals (28) oder wenigstens einer ausgewählten Zustandsgröße des Aktorzustands ($\eta$,$u$, $u$) sowie einer Subtraktion des ersten Rückführsignals (42) erhaltbar ist.

6. Prädiktoreinrichtung gemäß einem der Ansprüche 1 bis 5, **dadurch gekennzeichnet, dass** das durch die zweite Kombinationseinrichtung (44) erhaltbare Signal (40) aus einer Subtraktion des zweiten Rückführsignals (34) von dem unmatched Unsicherheitssignal ($\hat{\sigma}_{um}$) erhaltbar ist.

7. Prädiktoreinrichtung nach einem der voranstehenden Ansprüche, **dadurch gekennzeichnet, dass** die Zustandsmodellierungseinrichtung (22) zur Modellierung einer Flugdynamik eines Luftfahrzeugs ausgebildet ist.

8. Luftfahrzeug mit einer Regelungseinrichtung (10) zur Flugregelung, wobei die Regelungseinrichtung (10) eine Prädiktoreinrichtung (18) gemäß einem der voranstehenden Ansprüche aufweist.

9. L1-adaptives Regelungsverfahren, verwendend eine L1-adaptive Regelungseinrichtung (38), eine Adaptionseinrichtung (36), die ein matched Unsicherheitssignal ($\hat{\sigma}_m$) und ein unmatched Unsicherheitssignal ($\hat{\sigma}_{um}$) erzeugt, sowie eine Prädiktoreinrichtung (18), die eine Zustandsmodellierungseinrichtung (22) aufweist, mit den Schritten:

   a) Rückführen eines Ausgangssignals (32) der Zustandsmodellierungseinrichtung (22) in eine erste Rückführeinrichtung (26);
   b) Umsetzen des Ausgangssignals (32) in ein erstes Rückführsignal (42) mittels der ersten Rückführeinrichtung (26); und
   c) Erzeugen eines matched Eingangssignals (46) für die Zustandsmodellierungseinrichtung (22) mittels einer ersten Kombinationseinrichtung (30) durch Addition des matched Unsicherheitssignals ($\hat{\sigma}_m$) und eines gemessenen oder geschätzten Aktorzustands ($\eta$, $u$, $\hat{u}$, 28) sowie Subtraktion des ersten Rückführsignals (42),

   **gekennzeichnet durch** die Schritte:

   d) Rückführen des Ausgangssignals (32) der Zustandsmodellierungseinrichtung (22) in eine zweite Rückführeinrichtung (24);
   e) Umsetzen des Ausgangssignals (32) in ein zweites Rückführsignal (34) durch die zweite Rückführeinrichtung (24);
   f) Erzeugen eines unmatched Eingangssignals (40) für die Zustandsmodellierungseinrichtung (22) mittels einer zweiten Kombinationseinrichtung (44) durch Subtraktion des zweiten Rückführsignals (34) von dem unmatched Unsicherheitssignal ($\hat{\sigma}_{um}$).

10. Verfahren gemäß Anspruch 9, **gekennzeichnet durch den Schritt:**
   Schätzen eines Aktorzustands mittels einer Wandlermodellierungseinrichtung (20), die aus einer Stellgröße ($u_{cmd}$, $\eta_{cmd}$) ein Ausgangssignal ($\hat{u}$, 28) erzeugt, das eine Schätzung des Aktorzustands bildet.

**Claims**

1. Predictor device (18) for a control device (10) for generating at least one manipulated variable ($u_{cmd}$, $\eta_{cmd}$) of a controlled system (12, 12'), the control device (10) having at least one actuator (14) which can be controlled by means of the manipulated variable ($u_{cmd}$, $\eta_{cmd}$), a state which can be sensed by a sensor (16) and has at least one

   controlled variable ($x, \begin{bmatrix} \alpha \\ q \end{bmatrix}$) an adaptation device (36) which is designed to generate a matched uncertainty signal ($\hat{\sigma}_m$) and an unmatched uncertainty signal ($\hat{\sigma}_m$), and an L1-adaptive control device (38), the predictor device (18) having a state modeling function for estimating a behavior of the controlled system (12, 12') has a state modeling device (22) and is designed to output an estimated state with at least one estimated variable ($\hat{x}, \begin{bmatrix} \hat{\alpha} \\ \hat{q} \end{bmatrix}$), the predictor device (18) having at least one first feedback device (26) for providing a first feedback signal (42) from an output signal (32) of the state modeling device (22) for feeding into a first combination device (30), a measured or estimated actuator state (28, $\eta$,$u$,$u$) being fed into the first combination device (30) wherein the state modeling means (22) is adapted to receive an unmatched input signal (40) at an unmatched input, the matched uncertainty signal ($\hat{\sigma}_m$) being fed into the first combining means (30) for combination with the further signals (28, $\eta$,$u$,$\hat{u}$,42), wherein the first combining means (30) is adapted to combine the signals (28, 42, $\hat{\sigma}_m$) fed therein, and wherein the signal obtainable by the first combining means (30) forms a matched input signal (46) for feeding into a matched input of the state modeling means (22), **characterized in that** the predictor means (18) comprises a second feedback means (24) for providing a second feedback signal (34) from the output signal (32) for feeding into a second combination means (44), wherein the unmatched uncertainty signal ($\hat{\sigma}_{um}$) is fed into the second combination means (44) and wherein the signal obtainable by the second combination means (44) forms an unmatched input signal (40) for feeding into an unmatched input of the state modeling means (22).

2. Predictor device according claim 1, **characterized in that** the predictor device (18) comprises transducer modeling means (20) for estimating the actuator state $(u,\hat{u},\eta)$ based on the manipulated variable $(u_{cmd}, \eta_{cmd})$.

3. Predictor device according to claim 2, **characterized in that** the transducer modeling device (20) is designed for modeling actuators (14) and/or sensors (16) of the controlled system (12, 12').

4. Predictor device according to one of the preceding claims, **characterized in that** the first feedback device (26) and/or the second feedback device (24) have a multiplication device.

5. Predictor device according to one of the preceding claims, **characterized in that** the signal (46) obtainable by the first combining means (30) is obtainable from an addition of the matched uncertainty signal $(\hat{\sigma}_m)$ and the output signal (28) or at least one selected state variable of the actuator state $(\eta,u,\hat{u})$ and a subtraction of the first feedback signal (42).

6. Predictor device according to any one of claims 1 to 5, **characterized in that** the signal (40) obtainable by the second combining device (44) is obtainable from a subtraction of the second feedback signal (34) from the unmatched uncertainty signal $(\hat{\sigma}_{um})$.

7. Predictor device according to any one of the preceding claims, **characterized in that** the state modeling device (22) is adapted to model flight dynamics of an aircraft.

8. Aircraft comprising a control device (10) for flight control, wherein the control device (10) comprises a predictor device (18) according to one of the preceding claims.

9. An L1-adaptive control method using an L1-adaptive control means (38), an adaptation means (36) generating a matched uncertainty signal $(\hat{\sigma}_m)$ and an unmatched uncertainty signal $(\hat{\sigma}_{um})$, and a predictor means (18) comprising a state modeling means (22), comprising the steps of:

    (a) feeding back an output signal (32) of the state modeling means (22) to a first feedback means (26);
    b) converting the output signal (32) into a first feedback signal (42) by means of the first feedback means (26); and
    c) generating a matched input signal (46) for the state modeling means (22) by means of a first combining means (30) by adding the matched uncertainty signal $(\hat{\sigma}_m)$ and a measured or estimated actuator state $(\eta,u,\hat{u}, 28)$ and subtracting the first feedback signal (42),
    d) feeding back the output signal (32) of the state modeling means (22) to a second feedback means (24);
    e) converting the output signal (32) into a second feedback signal (34) by the second feedback means (24);
    f) generating an unmatched input signal (40) for the state modeling means (22) by means of the second combining means (44) by subtracting the second feedback signal (34) from the unmatched uncertainty signal $(\hat{\sigma}_{um})$.

10. Method according to claim 9, **characterized by** the step of:
Estimating an actuator state by means of a transducer modeling device (20) that generates an output signal $(\hat{u}, 28)$ from a manipulated variable $(u_{cmd}, \eta_{cmd})$ that forms an estimate of the actuator state.

## Revendications

1. Dispositif de prédiction (18) pour un dispositif de commande (10) destiné à générer au moins une grandeur de réglage $(u_{cmd}, \eta_{cmd})$ d'un système commandé (12, 12'), le dispositif de commande (10) comportant au moins un actionneur (14) qui peut être commandé au moyen de la grandeur de réglage $(u_{cmd}, \eta_{cmd})$, un état qui peut être détecté par un capteur (16) et qui comporte au moins une grandeur de réglage $\left( x, \begin{bmatrix} \alpha \\ q \end{bmatrix} \right)$ un dispositif d'adaptation (36) qui est conçu pour générer un signal d'incertitude adapté $(\hat{\sigma}_m)$ et un signal d'incertitude non adapté $(\hat{\sigma}_{um})$, et un dispositif de contrôle adaptatif L1 (38), le dispositif prédicteur (18) ayant une fonction de modélisation d'état pour estimer un comportement du système contrôlé (12, 12') et est conçu pour fournir un état estimé avec au moins une variable estimée $\left(\hat{x}, \begin{bmatrix} \hat{\alpha} \\ \hat{q} \end{bmatrix}\right),$ le dispositif prédicteur (18) ayant au moins un premier dispositif de rétroaction (26) pour fournir un premier signal de rétroaction (42) à partir d'un signal de sortie (32) du dispositif de modélisation d'état (22) pour alimenter un premier dispositif de combinaison (30), un état d'actionneur mesuré ou estimé (28, $\eta$, $u$, $\hat{u}$) étant alimenté dans le premier dispositif de combinaison (30) dans lequel le moyen de modélisation d'état (22) est adapté pour recevoir un signal d'entrée non adapté (40) à une entrée non adaptée, le signal d'incertitude adapté ($\hat{\sigma}_m$) étant introduit dans le premier moyen de combinaison (30) pour être combiné avec ou autres signaux (28, $\eta$, $u$, $\hat{u}$, 42), dans lequel le premier moyen de combinaison (30) est adapté pour combiner les signaux (28, 42, $\hat{\sigma}_m$) qui y sont introduits, et dans lequel le signal pouvant être obtenu par le premier moyen de combinaison (30) forme un signal d'entrée adapté (46) pour l'introduire dans une entrée adaptée du moyen de modélisation d'état (22), **caractérisé en ce que** le moyen de prédiction (18) comprend un second moyen de rétroaction (24) pour fournir un second signal de rétroaction (34) à partir du signal de sortie (32) pour l'alimenter dans un second moyen de combinaison (44), dans lequel le signal d'incertitude non adapté ($\hat{\sigma}_{um}$) est alimenté dans le second moyen de combinaison (44) et dans lequel le signal pouvant être obtenu par le second moyen de combinaison (44) forme un signal d'entrée non adapté (40) pour l'alimenter dans une entrée non adaptée du moyen de modélisation d'état (22).

**2.** Dispositif de prédiction selon la revendication 1, **caractérisé en ce que** le dispositif prédicteur (18) comprend des moyens de modélisation de transducteur (20) pour estimer l'état de l'actionneur ($u$, $\hat{u}$, $\eta$) sur la base de la variable manipulée ($u_{cmd}$, $\eta_{cmd}$).

**3.** Dispositif de prédiction selon la revendication 2, **caractérisé en ce que** le dispositif de modélisation du transducteur (20) est conçu pour modéliser des actionneurs (14) et/ou des capteurs (16) du système contrôlé (12, 12').

**4.** Dispositif de prédiction selon l'une quelconque des revendications précédentes, **caractérisé en ce que** le premier dispositif de rétroaction (26) et/ou le deuxième dispositif de rétroaction (24) comprennent un dispositif de multiplication.

**5.** Dispositif de prédiction selon l'une quelconque des revendications précédentes, **caractérisé en ce que** le signal (46) pouvant être obtenu par le premier moyen de combinaison (30) peut être obtenu à partir d'une addition du signal d'incertitude adapté ($\hat{\sigma}_m$) et du signal de sortie (28) ou d'au moins une variable d'état sélectionnée de l'état de l'actionneur ($\eta$, $u$, $\hat{u}$) et d'une soustraction du premier signal de rétroaction (42).

**6.** Dispositif de prédiction selon l'une quelconque des revendications 1 à 5, **caractérisé en ce que** le signal (40) pouvant être obtenu par le second moyen de combinaison (44) peut être obtenu à partir d'une soustraction du second signal de rétroaction (34) du signal d'incertitude non apparié ($\hat{\sigma}_{um}$).

**7.** Dispositif prédicteur selon l'une des revendications précédentes, **caractérisé en ce que** le dispositif de modélisation d'état (22) est adapté pour modéliser la dynamique de vol d'un aéronef.

**8.** Aéronef comprenant un dispositif de commande (10) pour le contrôle du vol, dans lequel le dispositif de commande (10) comprend un dispositif de prédiction (18) selon l'une quelconque des revendications précédentes.

**9.** Procédé de commande adaptative L1 utilisant un moyen de commande adaptative L1 (38), un moyen d'adaptation (36) générant un signal d'incertitude adapté ($\hat{\sigma}_m$) et un signal d'incertitude non adapté ($\hat{\sigma}_{um}$), et un moyen de prédiction (18) comprenant un moyen de modélisation d'état (22), comprenant les étapes consistant à

(a) en renvoyant un signal de sortie (32) du moyen de modélisation de l'état (22) à un premier moyen de rétroaction (26) ;
b) la conversion dudit signal de sortie (32) en un premier signal de rétroaction (42) au moyen dudit premier moyen de rétroaction (26) ; et
c) générer un signal d'entrée adapté (46) pour ledit moyen de modélisation d'état (22) au moyen dudit premier moyen de ou combinaison (30) en ajoutant ledit signal d'incertitude adapté ($\hat{\sigma}_m$) et un état d'actionneur mesuré ou estimé ($\eta$, $u$, $\hat{u}$, 28) et en soustrayant ledit premier signal de retour (42),
d) le retour du signal de sortie (32) du moyen de modélisation de l'état (22) vers un second moyen de retour (24) ;
e) la conversion du signal de sortie (32) en un second signal de retour (34) par le second moyen de retour (24) ;
f) générer un signal d'entrée non adapté (40) pour ledit moyen de modélisation d'état (22) au moyen dudit deuxième moyen de combinaison (44) en soustrayant ledit deuxième signal de rétroaction (34) dudit signal d'incertitude non adapté ($\hat{\sigma}_{um}$).

10. Méthode selon la revendication 9, **caractérisée par** l'étape :
    Estimation de l'état d'un actionneur au moyen d'un dispositif de modélisation de transducteur (20) générant à partir d'une variable manipulée ($u_{cmd}$, $\eta_{cmd}$) un signal de sortie ($\hat{u}$, 28) formant une estimation de l'état de l'actionneur.

Fig. 1

Fig. 2

Fig. 3

Fig. 4

Fig. 5

Fig. 6

Fig. 7

Fig. 8

Fig. 9

**IN DER BESCHREIBUNG AUFGEFÜHRTE DOKUMENTE**

**In der Beschreibung aufgeführte Patentdokumente**

- US 20110196514 A1